(19) Europäisches Patentamt European Patent Office Office européen des brevets

(11) **EP 3 824 037 B1**

(12) **EUROPEAN PATENT SPECIFICATION**

(45) Date of publication and mention of the grant of the patent:
**15.03.2023 Bulletin 2023/11**

(21) Application number: **19737763.3**

(22) Date of filing: **15.07.2019**

(51) International Patent Classification (IPC):
*C09J 123/20* $^{(2006.01)}$    *C08L 23/20* $^{(2006.01)}$
*C08F 210/08* $^{(2006.01)}$    *C08F 4/659* $^{(2006.01)}$

(52) Cooperative Patent Classification (CPC):
(C-Sets available)
**C09J 123/20;** C08F 4/65912; C08F 2420/06;
C08L 2205/025                                      (Cont.)

(86) International application number:
**PCT/EP2019/068939**

(87) International publication number:
**WO 2020/016143 (23.01.2020 Gazette 2020/04)**

(54) **POLYOLEFIN-BASED HOT MELT ADHESIVE COMPOSITION**

POLYOLEFINBASIERTE SCHMELZHAFTKLEBERZUSAMMENSETZUNG

COMPOSITION ADHÉSIVE THERMOFUSIBLE À BASE DE POLYOLÉFINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.07.2018 EP 18184154**

(43) Date of publication of application:
**26.05.2021 Bulletin 2021/21**

(73) Proprietor: **Basell Poliolefine Italia S.r.l.**
**20121 Milano (IT)**

(72) Inventors:
• **MARCHINI, Roberta**
**44122 Ferrara (IT)**
• **GUERRA, Silvia**
**44122 Ferrara (IT)**
• **PASQUALI, Stefano**
**44122 Ferrara (IT)**
• **RASTOGI, Ankur**
**65760 Eschborn (DE)**
• **SPATARO, Stefano**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2015/074830    WO-A1-2018/007280**
**WO-A1-2018/007451**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 824 037 B1

(52) Cooperative Patent Classification (CPC): (Cont.)

C-Sets
**C08F 210/08, C08F 2/001;**
**C08F 210/08, C08F 4/65927;**
**C09J 123/20, C08L 23/20;**
C08F 210/08, C08F 210/16, C08F 2500/17,
C08F 2500/03, C08F 2500/08, C08F 2500/12,
C08F 2500/32, C08F 2500/34

C-Sets

**Description**

FIELD OF THE INVENTION

The present disclosure relates to a polyolefin-based hot melt adhesive composition comprising butene-1 copolymers having very high melt flow.

BACKGROUND OF THE INVENTION

Hot melt adhesive compositions comprising highly flowable butene-1 homo- or copolymers are known in the art, for example from the European patent applications EP671431 (Himont Inc.) or from EP314495 (Shell Oil Company).
The polybutene-1 comprised in the composition disclosed in the documents cited above are visbroken with peroxides to achieve low viscosity values. It is also known in the art that the use of peroxidic degradation brings about some disadvantages, such as unpleasant odor and high yellow index, which may prevent the use of said composition in some technical fields, such as food packaging.
Ex-reactor low molecular weight polyolefins are also known to be suitable for use in hot melt adhesive compositions.
For instance, US2008190541A1 discloses a hot melt adhesive compositions containing at least two metallocene-catalytically produced butene-1 copolymers, which differ from each other for the melt flow indices. The low melt index component is essential to obtain the balance of properties for the hot melt adhesive.
US6218457B1 discloses hot melt adhesives containing polybutylene copolymers having a favorable balance of properties. The polybutylene copolymers may be highly flowable, with a melt flow rate of about 700 g/10min.
Hot melt adhesive composition containing butene-1 copolymers having MFR in the range from 200 to 1500 g/10min are known from the International patent applications WO2015/074830 and WO2018/007451. Said compositions exhibit a good compromise between rheological and thermal properties.
It is also known in the art, in particular from WO2018/007280, that bimodal butene-1 polymer compositions having melt flow rate values from 400 to 2000 g/10min. have unexpected profile of properties which renders them suitable for use in hot melt adhesive compositions.
In this context, it is still felt the need of polyolefin-based hot melt adhesive compositions with a broad operational temperature range, good thermal and color stability, and good adhesive properties.

SUMMARY OF THE INVENTION

The Applicant has now found a polyolefin-based hot melt adhesive composition having good thermal and color stability, high overlap shear strength, high SAFT and long open time.
The hot melt adhesive composition of the present disclosure comprises:

(A) 28-75 wt.% of a copolymer of butene-1 with at least one comonomer selected from ethylene, propylene, C5-C10 alpha-olefins and mixtures thereof, having copolymerized comonomer content of 0.5-3.0 wt.%, Melt Flow Rate (MFR) values measured according to ISO 1133 (190°C, 2.16kg) of from 200 to 1,500 g/10min. and a melting point (TmII) higher than 80°C, measured by Differential Scanning Calorimetry with a scanning speed of 10°C/minute; and
(B) 25-72 wt.% of at least one additional component selected from among waxes, resins, plasticizers, additional polymers and mixtures thereof,

wherein the amounts of A) and B) are referred to the total weight of A) + B).
The hot melt adhesive composition of the instant disclosure are also endowed with a good balance between thermal properties, crystallinity, viscosity and adhesive properties.

BRIEF DESCRIPTION OF THE DRAWINGS

The claimed subject matter may be understood by reference to the following description taken in conjunction with the accompanying figures in which:

FIG. 1 provides the viscosity values at different temperatures of the hot melt adhesive composition of reference example 3 and example 4 in comparison with the viscosity values recorded under the same condition for the HMA of comparative examples 5 and 6;
FIG. 2 provides the viscosity values at different temperatures of the hot melt adhesive composition of reference example 7 and example 8 in comparison with the viscosity values recorded under the same condition for the HMA of comparative examples 9 and 10;
FIG. 3 illustrates the Overlap Shear Strength values of the HMA adhesives of reference example 7 and example 8 and of comparative examples 9 and 10 on different substrates.

## DETAILED DESCRIPTION OF THE INVENTION

In the context of the present disclosure, the term "room temperature" indicates a temperature of 25±2°C measured at 50% of relative humidity.

In the context of the present disclosure the term "solid" indicates a material having a well definite volume and an own shape at room temperature.

The expression "not solid" indicates a matter which is "rheologically liquid", i.e. a matter having a Viscous Modulus G" that is greater than its Elastic Modulus G', or also, what is equivalent by definition, a Tan Delta greater than 1, said values being measured at room temperature. Said expression encompasses matter that, even if it can be temporarily shaped in a certain shape, it (in a relatively short period of time, typically not longer than one day) permanently deforms and spontaneously flows, even only by the action of its own weight, taking the shape of the container that contains it or of the solid surface on which it is lying. Therefore in said expression are comprised not only all the materials that can be described as "liquid", but also materials are defined as "creamy", "pasty", "jelly-like", "fluid", "greasy", "semi-solid", and the like.

An object of the present disclosure is therefore a hot melt adhesive composition comprising:

(A) 28-75 wt.% of a copolymer of butene-1 with at least one comonomer selected from ethylene, propylene, C5-C10 alpha-olefins and mixtures thereof, having (total) copolymerized comonomer content of 0.5-3.0 wt.%, Melt Flow Rate (MFR) values measured according to ISO 1133 (190°C, 2.16kg) of from 200 to 1500 g/10min. and a melting point (TmII) higher than 80°C; and

(B) 25-72 wt.% of at least one additional component selected from among waxes, resins, plasticizers, additional polymers and mixtures thereof,

wherein the amounts of A) and B) are referred to the total weight of A) + B).

In one embodiment, the butene-1 copolymer component (A) may have a MFR measured according to ISO 1133 (190°C, 2.16kg) of from 200 to less than 1500 g/10 min., preferably from 400 to less than 1500 g/10 min., more preferably from 500 to 1300 g/10 min..

The at least one comonomer is selected from ethylene, propylene, C5-C10 alpha-olefins and mixtures thereof, preferably said at least one comonomer can be selected from among ethylene, propylene, hexene-1, octene-1 and mixture thereof.

More preferably the at least one comonomer can be ethylene.

In one embodiment, the butene-1 copolymer component (A) may have a copolymerized comonomer content, in particular a copolymerized ethylene content, of from 0.7 to less than 2.0 wt.%, preferably of 0.7-1.5 wt.%.

In one further embodiment, the butene-1 component (A) may be a butene-1 copolymer composition comprising:

(A1) a butene-1 homopolymer or a copolymer of butene-1 with at least one comonomer selected from ethylene, propylene, C5-C10 alpha-olefins and mixtures thereof, having a copolymerized comonomer content ($C_{A1}$) of up to 3 wt.%;

(A2) a copolymer of butene-1 with at least one comonomer selected from ethylene, propylene, C5-C10 alpha-olefins and mixtures thereof, having a copolymerized comonomer content ($C_{A2}$) of 3-10 wt.%;

said composition having a total copolymerized comonomer content of 0.5-3.0 wt.% referred to the sum of (A1) + (A2) and preferably a content of fraction soluble in xylene at 0°C equal to or less than 60 wt.%, determined on the total weight of (A1)+(A2).

The relative amount of component (A1) and (A2) may range from 10% to 40% by weight, in particular from 15% to 35% by weight of (A1) and from 90% to 60% by weight, in particular from 85% to 65% by weight of (A2), said amounts being referred to the sum of (A1)+(A2).

Said butene-1 copolymer composition is described in the patent application WO2018/007280.

Preferably, the butene-1 copolymer component (A) may have at least one of the following additional features:

(a) a molecular weight distribution (Mw/Mn) lower than 4, preferably lower than 3; more preferably lower than 2.5, the lower limit being of 1.5 in all cases; and/or

(b) melting point (TmII) lower than 110°C, preferably lower than 100°C, more preferably lower than 90°C; and/or

(c) glass transition temperature (Tg) in the range from - 40°C to - 10°C, preferably from -30°C to -10°C; and/or

(d) rotational (Brookfield) viscosity at 180°C (shear rate 100 s-1) of from 5,000 to 50,000 mPa.sec, in particular from 8,000 to 20,000 mPa.sec; and/or

(e) X-ray crystallinity comprised in the range 25-60%.

In one embodiment, the butene-1 copolymer (A) may have all the additional features (a)-(t).

Optionally, the butene-1 copolymer component (A) may have at least one of the further following additional features:

(i) intrinsic viscosity (IV) measured in tetrahydronaphtalene (THN) at 135°C equal to or lower than 0.8 dl/g, preferably comprised between 0.2 and 0.6 dl/g; and/or

(ii) a density of higher than 0.885-0.925 g/cm$^3$, in particular of 0.890-0.920 g/cm$^3$; and/or

(iii) a yellowness index of less than 0; in particular ranging from -1 to -5.

In one embodiment, the butene-1 copolymer (A) may have all the additional features (i)-(iii).

In a further embodiment, the butene-1 copolymer (A) may have all the additional features (a)-(e) and also all the additional features from (i) to (iii).

The butene-1 copolymer component (A) can be obtained by copolymerizing butene-1 and the at least one comonomer in the presence of a catalyst system obtainable by contacting:

- a stereorigid metallocene compound;
- an alumoxane or a compound capable of forming an alkyl metallocene cation; and, optionally,
- an organo aluminum compound.

The patent applications WO2004/099269, WO2006/045687 and WO2018/007280 describe a process and a catalysts system suitable for producing the butene-1 copolymer component (A).

The butene-1 copolymer component (A) can be obtained by a polymerization process carried out in one or more reactors connected in series. In the latter case, the catalyst can be added in the first reactor only, or in more than one reactor. As explained in WO2004/099269, the polymerization process can be carried out in the liquid phase, optionally in the presence of an inert hydrocarbon solvent, or in the gas phase, using fluidized bed or mechanically agitated gas phase reactors. Preferably, the polymerization process is carried out by using liquid butene-1 as polymerization medium. The polymerization temperature ranges from 20°C to 150°C, preferably from 50°C to 90°C, more preferably it is from 65°C to 82°C.

As explained in WO2006/045687, hydrogen can be advantageously used to regulate the molecular weight of butene-1 copolymers. The concentration of hydrogen during the polymerization reaction carried out in the liquid phase is higher than 1800 molar ppm and lower than 6000 molar ppm, preferably it ranges from 2000 molar ppm to 6000 molar ppm.

Butene-1 copolymers having low melting point can be obtained by properly selecting the copolymerized comonomer content, in particular ethylene content. Thus, the butene-1 copolymer component (A) can be obtained with a polymerization process wherein the (total) amount of the comonomer, in particular of ethylene, in the liquid phase ranges from 0.1wt.% to 8wt.%, preferably from 0.2 wt.% to 6 wt.%, with respect to the total weight of butene-1 monomer present in the polymerization reactor.

When the butene-1 copolymer (A) is a butene-1 copolymer composition comprising the component (A1) and (A2) as described above, the polymerization process comprises at least two polymerization stages, carried out in two or more reactors connected in series. When component (A1) is a copolymer, for the preparation of component (A1) the amount of comonomer in the liquid phase can be from 0.1 wt.% to 1.2 wt.%, while it can be from 1 wt.% to 8 wt.% for the preparation of component (A2).

The hot melt adhesive composition of the invention is further comprising at least one additional component (B) selected from among waxes (1), resins (2), plasticizers (3), additional polymers (4) and mixtures thereof.

According to one embodiment, the at least one additional component (B) may be solid at room temperature.

In a further embodiment, the additional component (B) may not be a "not solid" viscosity modifier.

In one embodiment, said at least one additional component (B) may be selected from among waxes (1), resins (2), additional polymers (4) and mixtures thereof, preferably from waxes (1), resins (2) and mixtures thereof.

Suitable waxes (1) can be selected among polyolefin waxes; natural (plant, animal or mineral) waxes; petroleum waxes, such as paraffin waxes; synthetic waxes made by polymerizing CO and H$_2$, such as Fischer-Tropsch waxes; naphtalenic waxes and mixtures thereof, preferably Fischer-Tropsch waxes.

Resins (2) suitable as component (B) in the hot melt adhesive composition of the present disclosure are tackifiers that can be selected among hydrogenated hydrocarbon resins and derivatives thereof, such as aliphatic hydrocarbon resins, aromatic hydrocarbon resins and aliphatic/aromatic hydrocarbon resins; terpene-derived resins, such as polyterpenes, terpene/phenolic resins; natural resins and natural resin esters, such as rosin, rosin ester and tall oil rosin ester; and mixtures thereof, preferably hydrogenated hydrocarbon resins.

The resin (2) may have a ring and ball softening point of higher than 120°C, preferably equal to or higher than 125°C, measured according to ASTM Standard E 28.

Plasticizers (3) can be selected among plasticizing oils, such as mineral oils; olefin oligomers or low molecular weight polyolefins, such as liquid polybutylenes; and mixtures thereof.

The at least one further component (B) of the hot melt adhesive composition may be an additional polymer (4) different from the butene-1 copolymer (A) and said additional polymer (4) can be selected among amorphous poly-alpha-olefins, thermoplastic polyurethanes, ethylene/(meth)acrylate copolymers, ethylene/vinyl acetate copolymers, and mixtures thereof.

The viscosity and adhesion properties of the hot melt adhesive composition of the present disclosure can be tailored, thereby optimizing the composition for different applications. The hot melt adhesive composition is therefore suitable for use in woodworking, for packaging, in the general assembly field, etc, particularly to assembly components of electrical equipment, ceramics, furniture, textiles, upholstery, leather, plastic, paper and cardboard.

In one first embodiment, the hot melt adhesive composition of the present disclosure may preferably be a composition (i) comprising:

(A) 30-40 wt.% of a copolymer of butene- 1;
(B.1) 15-25 w.% of at least one wax,
(B.2) 42-52 wt.% of at least one resin; and
wherein the amounts of (A), (B.1) and (B.2) are referred to the to the total weight of (A) + (B.1) +
(B.2) and wherein the components (A), (B.1) and (B.2) are as described above.

Said composition (i) is particularly suitable for use in in the packaging field to assembly paper, cardboard and the like.

The hot melt adhesive composition of said first embodiment may have rotational (Brookfield) viscosity at 180°C (shear rate 100 s-1) of lower than 7,000 mPa.s, or equal to or lower than 5,000 mPa.s, or equal to or lower than 3,000 mPa.s., the lower limit being 1,000 mPa.s in all cases.

According to this embodiment, the Brookfield viscosity at 170°C (shear rate 100 s-1) may be of from 4,000 mPa.s. to 1,500 mPa.s.

According to a further embodiment, the hot melt adhesive composition of the present disclosure may be a composition (ii) comprising:

(A) 65-75 wt.% of a copolymer of butene-1; and
(B.2) 25-35 wt.% of at least one resin,
wherein the amounts of (A) and (B.2) are referred to the to the total weight of (A) + (B.2) and
wherein the components (A) and (B.2) are as described above.

In said further embodiment, the hot melt adhesive composition of the present disclosure may have rotational (Brookfield) viscosity at 180°C (shear rate 100 s-1) of 5,000 - 25,000 mPa.s, or of 7,000 - 25,000 mPa.s, or of 7,000-20,000 mPa.s, or of 10,000 - 20,000 mPa.s.

In this embodiment, the Brookfield viscosity at 170°C (shear rate 100 s-1) may be equal to or higher than 7,000 mPa.s, preferably equal to or higher than 10,000 mPa.s, the upper limit being of 30,000 mPa.s in all cases.

Preferably, the resin (B.2) may have a ring and ball softening point of higher than 120°C, preferably equal to or higher than 125°C, measured according to ASTM Standard E 28.

The hot melt adhesive composition (ii) may additionally be endowed with at least one of the following properties:

- an Overlap Shear Strength (OLS) value on at least one material selected among polypropylene, aluminum alloy and wood equal to or higher than 2 MPa, preferably higher than 3 MPa. In a preferred embodiment the hot melt adhesive composition (ii) may have a OLS value equal to or higher than 2 MPa on all the above-mentioned materials; and/or
- open time higher than 250 seconds, preferably higher than 270 seconds.

In a preferred embodiment, the hot melt adhesive composition (ii) may have OLS value and open time value as described above.

The hot melt adhesive composition (ii) is particularly suitable for use in woodworking and in the general assembly field, eg. to assembly components of electrical equipment, ceramics, furniture, textiles, upholstery, leather, plastic, etc.

The hot melt adhesive composition of the present disclosure also show very good thermal stability and reduced color change.

The hot melt adhesive composition of the present disclosure offer a broad operational temperature range.

In addition to the above-mentioned components (A) and (B), the hot melt adhesive composition of the present disclosure can further optionally, but preferably, comprise additives selected from antioxidants, UV stabilizers, aging protection agents, nucleating agents and mixtures thereof. Nucleating agents can be selected among isotactic polypropylene, polyethylene, amides and talc. Preferably, the total amount of the additives may be from 0.01 to 1 wt.%, with respect to the total weight of the hot melt adhesive composition.

The composition of the invention can be prepared by known methods and equipment, such as blending of the component in the molten state in a single- or twin screw extruder.

The following examples are illustrative only, and are not intended to limit the scope of the invention in any manner whatsoever.

EXAMPLES

The following analytical methods are used to determine the properties reported in the description and in the examples.

**Melt flow rate (MFR)** was measured according to ISO 1133 (190°C, 2.16kg, except where different load and temperatures are specified).

**Comonomer content (wt.%)** measured via IR spectroscopy.

The spectrum of a pressed film of the polymer was recorded in absorbance vs. wavenumbers ($cm^{-1}$). The following measurements were used to calculate the ethylene content: a) area (At) of the combination absorption bands between 4482 and 3950 $cm^{-1}$ which is used for spectrometric normalization of film thickness;

b) factor of subtraction ($FCR_{C2}$) of the digital subtraction between the spectrum of the polymer sample and the absorption band due to the sequences BEE and BEB (B: 1-butene units, E: ethylene units) of the methylenic groups ($CH_2$ rocking vibration);

c) Area ($A_{C2,block}$) of the residual band after subtraction of the $C_2PB$ spectrum. It comes from the sequences EEE of the methylenic groups ($CH_2$ rocking vibration).

APPARATUS

A Fourier Transform Infrared spectrometer (FTIR) was used, which is capable of providing the spectroscopic measurements above reported. A hydraulic press with platens heatable to 200°C (Carver or equivalent) was used.

METHOD

Calibration of (BEB + BEE) sequences

A calibration straight line is obtained by plotting %(BEB + BEE)wt vs. $FCR_{C2}/A_t$. The slope Gr and the intercept Lr are calculated from a linear regression.

Calibration of EEE sequences

A calibration straight line is obtained by plotting %(EEE)wt vs. $A_{C2,block}/A_t$. The slope $G_H$ and the intercept $I_H$ are calculated from a linear regression.

Sample preparation

Using a hydraulic press, a thick sheet is obtained by pressing about g 1.5 of sample between two aluminum foils. If homogeneity is in question, a minimum of two pressing operations are recommended. A small portion is cut from this sheet to mold a film. Recommended film thickness ranges between 0.1-0.3 mm. The pressing temperature is 140 ± 10 °C. A crystalline phase modification takes place with time, therefore it is recommended to collect the IR spectrum of the sample film as soon as it is molded.

Procedure

The instrument data acquisition parameters are as follows:

Purge time: 30 seconds minimum.
Collect time: 3 minutes minimum.
Apodization: Happ-Genzel.
Resolution: 2 cm-1.
Collect the IR spectrum of the sample vs. an air background.

CALCULATION

Calculate the concentration by weight of the BEE + BEB sequences of ethylene units:

$$\%(BEE + BEB)wt = Gr\frac{FCR_{C2}}{A_t} + I_r$$

Calculate the residual area (AC2,block) after the subtraction described above, using a baseline between the shoulders of the residual band.
Calculate the concentration by weight of the EEE sequences of ethylene units:

$$\%(EEE)wt = G_H\frac{A_{C2,block}}{A_t} + I_H$$

Calculate the total amount of ethylene percent by weight:

$$\% C2wt = [\%(BEE + BEB)wt + \%(EEE)wt]$$

**Mw/Mn determination.** Measured by way of Gel Permeation Chromatography (GPC) in 1,2,4-trichlorobenzene (TCB). Molecular weight parameters (Mn, Mw, Mz) and molecular weight distributions Mw/Mn for all the samples were measured by using a GPC-IR apparatus by PolymerChar, which was equipped with a column set of four PLgel Olexis mixed-bed (Polymer Laboratories) and an IR5 infrared detector (PolymerChar). The dimensions of the columns were $300 \times 7.5$ mm and their particle size was 13 $\mu$m. The mobile phase flow rate was kept at 1.0 mL/min. All the measurements were carried out at 150 °C. Solution concentrations were 2.0 mg/mL (at 150 °C) and 0.3 g/L of 2,6-diterbuthyl-p-chresole were added to prevent degradation. For GPC calculation, a universal calibration curve was obtained using 12 polystyrene (PS) standard samples supplied by PolymerChar (peak molecular weights ranging from 266 to 1220000). A third-order polynomial fit was used for interpolate the experimental data and obtain the relevant calibration curve. Data acquisition and processing was done by using Empower 3 (Waters). The Mark-Houwink relationship was used to determine the molecular weight distribution and the relevant average molecular weights: the K values were KPS = 1.21 $\times$ 10$^4$ dL/g and KPB = 1.78 $\times$ 10$^{-4}$ dL/g for PS and polybutene (PB) respectively, while the Mark-Houwink exponents $\alpha$ = 0.706 for PS and $\alpha$ = 0.725 for PB were used.
For butene/ethylene copolymers, as far as the data evaluation is concerned, it was assumed for each sample that the composition was constant in the whole range of molecular weight and the K value of the Mark-Houwink relationship was calculated using a linear combination as reported below: $K_{EB} = x_E K_{PE} + x_B K_{PB}$ where $K_{EB}$ is the constant of the copolymer, $K_{PE}$ (4.06 $\times$ 10$^{-4}$, dL/g) and $K_{PB}$ (1.78 $\times$ 10$^{-4}$ dL/g) are the constants of polyethylene (PE) and PB, $x_E$ and $x_B$ are the ethylene and the butene weight relative amount with $x_E$ + $x_B$ = 1. The Mark-Houwink exponents $\alpha$ = 0.725 was used for all the butene/ethylene copolymers independently on their composition. End processing data treatment was fixed for all samples to include fractions up at 1000 in terms of molecular weight equivalent. Fractions below 1000 were investigated via GC.
**The thermal properties** were determined by Differential Scanning Calorimetry (D.S.C.) on a Perkin Elmer DSC-7 instrument. The melting temperatures of butene-1 copolymers and of the HMA compositions were determined according to the following method:

- TmII (melting temperature/s measured in second heating run): a weighted sample (5-10 mg) obtained from the polymerization (or a weighted sample of the HM A composition) was sealed into aluminium pans and heated at 200°C with a scanning speed corresponding to 10°C/minute. The sample was kept at 200°C for 5 minutes to allow a complete melting of all the crystallites thus cancelling the thermal history of the sample. Successively, after cooling to -20°C with a scanning speed corresponding to 10°C/minute, the peak temperature was taken as crystallization temperature (Tc). After standing 5 minutes at - 20°C, the sample was heated for the second time at 200°C with a scanning speed corresponding to 10°C/min. In this second heating run, the peak temperature/s measured were marked as (TmII) and the area under the peak (or peaks) as global melting enthalpy (DH TmII).

- The melting enthalpy and the melting temperature were measured also after aging (without cancelling the thermal history) as follows by using the Differential Scanning Calorimetry (D.S.C.) on an Perkin Elmer DSC-7 instrument. A weighted sample (5-10 mg) obtained from the polymerization (or a weighted sample of the HMA composition) was sealed into aluminium pans and heated at 200°C with a scanning speed corresponding to 10°C/minute. The sample was kept at 200°C for 5 minutes to allow a complete melting of all the crystallites. The sample was then stored for 10 days at room temperature. After 10 days the sample was subjected to DSC, it was cooled to -20°C, and then it was heated at 200°C with a scanning speed corresponding to 10°C/min. In this heating run, the peak temperature (or temperatures when more than one peack was present) were recorded as the melting temperatures (TmI), and the area under the peak (or peaks) as global melting enthalpy after 10 days (DH TmI).

**Glass transition temperature (Tg) via Dynamic Mechanical Thermal Analysis (DMTA).** Molded specimens of 76 mm by 13 mm by 1 mm are fixed to the DMTA machine for tensile stress. The frequency of the tension and relies of the sample is fixed at 1 Hz. The DMTA translates the elastic response of the specimen starting from -100°C to 130°C. In this way it is possible to plot the elastic response versus temperature. The elastic modulus for a viscoelastic material is defined as E=E'+iE". The DMTA can split the two components E' and E" by their resonance and plot E' vs temperature and E/E" = tan $(\delta)$ vs temperature. The glass transition temperature Tg is assumed to be the temperature at the maximum of the curve E/E" = tan $(\delta)$ vs temperature.

**Rotational (Brookfield) viscosity**

- for the polymer as such: measured at 180°C and a deformation rate of and 100 s$^{-1}$, using a RheolabQC instrument, which is a rotational rheometer, consisting of a high-precision encoder and a dynamic EC motor. It is possible to select between controlled shear rate (CR) and controlled shear stress (CS) test settings. It is suitable for investigations on the mixing and stirring behavior of emulsions and dispersions and pastes using concentric cylinder systems, double gap systems and different vane geometries and spindles. During the test, the sample is subjected at a deformation rate sweep from 1 s$^{-1}$ to 1000 s$^{-1}$. The torque is measured for each deformation rate and the corresponding viscosity is calculated by the instrument software;
- for the hot melt composition: determined using a Bohlin Gemini viscometer (Malvern) and the following operative conditions: cone/plate 1°/20mm; gap 30 micron; temperature range: 110°-190°C; shear rate 100 s$^{-1}$.

**Crystallinity** was measured by X-Ray diffraction according to the following method: The instrument used to measure crystallinity is a X-ray Diffraction Powder Diffractometer (XDPD) that uses the Cu-K$\alpha$1 radiation with fixed slits and able to collect spectra between diffraction angle 2$\Theta$ = 5° and 2$\Theta$ = 35° with step of 0.1° every 6 seconds.

The samples are diskettes of about 1.5-2.5 mm of thickness and 2.5-4.0 cm of diameter made by compression molding. The diskettes are aged at 23°C for 96 hours.

After this preparation the specimen is inserted in the XDPD sample holder. Set the XRPD instrument in order to collect the XRPD spectrum of the sample from diffraction angle 2$\Theta$ = 5° to 2$\Theta$ = 35° with step of 0.1° by using counting time of 6 seconds, at the end the final spectrum is collected.

Defining Ta as the total area between the spectrum profile and the baseline expressed in counts/sec•2$\Theta$.; and Aa as the total amorphous area expressed in counts/sec•2$\Theta$. Ca is total crystalline area expressed in counts/sec•2$\Theta$.

The spectrum or diffraction pattern is analyzed in the following steps:

1) define a suitable linear baseline for the whole spectrum and calculate the total area (Ta) between the spectrum profile and the baseline;
2) define a suitable amorphous profile, along the whole spectrum, that separate , the amorphous regions from the crystalline ones according to the two phase model;
3) calculate the amorphous area (Aa) as the area between the amorphous profile and the baseline;
4) calculate the crystalline area (Ca) as the area between the spectrum profile and the amorphous profile as Ca = Ta- Aa; and
5) Calculate the degree of crystallinity of the sample using the following formula:

$$\%Cr = 100 \text{ x } Ca \text{ / } Ta$$

**Intrinsic viscosity:** determined in tetrahydronaphthalene at 135 °C according to norm ASTM D 2857.

**Density:** Determined according to norm ISO 1183-1, method A, Part 1: immersion method. Test specimens were obtained by compression moulded plaques. Density is measured after 10 days conditioning.

**Fractions soluble and insoluble in xylene at 0°C:** 2.5 g of polymer composition and 250 $cm^3$ of o-xylene are introduced in a glass flask equipped with a refrigerator and a magnetic stirrer. The temperature is raised in 30 minutes up to the boiling point of the solvent. The so obtained clear solution is then kept under reflux and stirring for further 30 minutes. The closed flask is then cooled to 100°C in air for 10 to 15 minutes under stirring and then kept for 30 minutes in thermostatic water bath at 0°C for 60 minutes as well. The so formed solid is filtered on quick filtering paper at 0°C. 100 $cm^3$ of the filtered liquid is poured in a previously weighed aluminum container which is heated on a heating plate under nitrogen flow, to remove the solvent by evaporation. Thus, the fraction (percent by weight) of polymer soluble in xylene (XS) is calculated from the average weight of the residues. The polymer fraction insoluble in o-xylene at 0°C (XI) is calculated as: XI (%) = 100 - XS (%).

**Yellowness index** measured according to ASTM method D1925.

**Flexural modulus** was measured according to ISO 178. Specimens for flexural test were cut from compression molded plaques pressed at 200°C and aged via autoclave at RT for 10min at 2kbar. Specimens thickness was of 4mm.

**Preparation of catalyst components:** Dimethylsilyl{(2,4,7-trimethyl-1-indenyl)-7-(2,5-dimethyl-cyclopenta[1,2-b:4,3-b']-dithiophene)} zirconium dichloride (metallocene A-1) was prepared according to Example 32 of WO01/47939.

**Preparation of the hot melt adhesive compositions:** the butene-1 copolymers (PB-1), or the commercial polymers of the comparative examples, and the resin were melted in a ventilated oven at 170°C and subsequently mixed in a high speed mixer (Thinky) at 1200 rpm. The mixing process was carried out in 2/3 steps:

- step 1: about half of the amount of butene-1 copolymer, about half the amount of the resin and the whole amount of additive were loaded to the mixer and mixed for 8 minutes;
- step 2: the rest of the polymer and the resin were loaded to the mixer and mixed for 8 minutes; and optionally
- step 3: the composition was left to stand for 10 minutes and subsequently the wax was added. The resulting blend was mixed for 8 minutes.

After complete mixing, the blend was poured onto a silicone-coated release paper and an adhesive film of 300μm was produced with a roller press.

**Overlap Shear Strength (OLS).** The overlap shear strength of the hot melt adhesive compositions is determined by adhering 300±50mm2 of overlapping ends of specimens of different materials measuring 25x75x1.5 mm with a layer of the hot melt adhesive composition to be tested, such that the free ends of the specimens extend in opposite directions. The specimens are pressed together with 800kPa = 80N/cm$^2$ pressure for 30 seconds. The samples are tested after 24h storage at room temperature (25°±2°C). The free ends of the specimens are inserted in the jaws of a Zwick Roll Universal test system Type UTS 20kN table module constructed to DIN EN 51220, Zwick GmbH & Co. KG 89079 Ulm. Load cell type U2A, 20kN, Hottinger Baldwin Messtechnik, 64293 Darmstadt. The specimens are separated with an angle of 180°, pulling the jaws at a rate of 2mm/min. The overlap shear strength value thus obtained is recorded in MegaPascals (MPa). The following conditioned materials were used:

- aluminum alloy AlMg3 sand blasted with high-class corundum F100; cleaning standard SA ½ according to ISO 8501-1;
- polypropylene (PP) cleaned with MEK, 5 minutes drying time;
- wood (beech): dust removed with compressed air, surface roughening with abrasive paper (80 grain size), dust removed with compressed air after abrasion.

**Shear Adhesion Failure Temperature.** Measured according to the test method PSTC-17 (Date of issuance12/12).

**Open time.** The open time is defined as the longest time that an adhesive material remains capable of adhesion after it has been cooled from the melt to room temperature. A uniform bead of 1.5 g/m of the hot melt composition molten at 170°C was applied onto a specimen of cardboard substrate 200x24.8mm at ambient temperature (one side coated, 400 g/m$^2$ chromo duplex cardboard GD2), and then the second cardboard specimen pressed on to it by a 2kg roller. After fixed intervals of 5 seconds, the second carboard specimen was slowly pulled apart . The total time until no fiber tear occurred was recorded as the open time for the adhesive for that sample specimen. An average of the open time was taken from three such recordings. The relative open time is expressed as % with respect to the lowest value.

## REFERENCE EXAMPLE 1

Preparation of the catalytic solution: Under nitrogen atmosphere, 6400 g of a 33 g/L solution of triisobutylaluminium (TIBA) in isododecane and 567 g of 30% wt/wt solution of methylalumoxane (MAO) in toluene are loaded in a 20 L jacketed glass reactor, stirred by means of an anchor stirrer, and allowed to react at room temperature for about 1 hour under stirring.

After this time, 1.27 g of metallocene A-I is added and dissolved under stirring for about 30 minutes.

The final solution is discharged from the reactor into a cylinder through a filter to remove eventual solid residues.

The composition of the solution resulted to be:

| Al (wt.%) | Zr (wt.%) | Al/Zr (mol ratio) | metallocene conc. (mg/l) |
|-----------|-----------|-------------------|--------------------------|
| 1.72 | 0.0029 | 2001 | 137 |

Polymerization of the butene-1 copolymer. The polymerization was carried out in two stirred reactors operated in series, in which liquid butene-1 constituted the liquid medium. The catalyst system described above was fed in both reactors. The polymerization conditions are reported in Table 1. The butene-1 copolymer was recovered as melt from the solution and cut in pellets. The copolymer was further characterized and the data are reported in Table 2.

## EXAMPLE 2

Preparation of the catalytic solution: Under nitrogen atmosphere, 6400 g of a 33 g/L solution of TIBA in isododecane and 567 g of 30% wt/wt solution of MAO in toluene are loaded in a 20 L jacketed glass reactor, stirred by means of an anchor stirrer, and allowed to react at room temperature for about 1 hour under stirring.

After this time, 1.27 g of metallocene A-I is added and dissolved under stirring for about 30 minutes.

The final solution is discharged from the reactor into a cylinder through a filter to remove eventual solid residues.

The composition of the solution resulted to be:

| Al (wt.%) | Zr (wt.%) | Al/Zr (mol ratio) | metallocene conc. (mg/l) |
|-----------|-----------|-------------------|--------------------------|
| 1.72 | 0.0029 | 2001 | 137 |

Polymerization of the butene-1 copolymer. The polymerization was carried out in two stirred reactors operated in series, in which liquid butene-1 constituted the liquid medium. The catalyst system described above was fed in both reactors. The polymerization conditions are reported in Table 1. The butene-1 copolymer was recovered as melt from the solution and cut in pellets. The copolymer was further characterized and the data are reported in Table 2.

Table 1

| | | Reference Example 1 | Example 2 |
|---|---|---|---|
| First reactor | | | |
| Temperature | °C | 75 | 75 |
| H2 in liquid phase | molar ppm | 2600 | 3248 |
| C2 in liquid phase | wt.% | - | 0.3 |
| Mileage | Kg/gMe | 1953 | 1485 |
| Split | wt.% | 22 | 60 |
| C2 content (A1) | wt.% | 0 | 1 |
| C2 content (A1) | mole% | - | 1.98 |
| Second reactor | | | |
| Temperature | °C | 75 | 75 |
| H2 in liquid phase | molar ppm | 2600 | 3248 |
| C2 in liquid phase | wt.% | 4.3 | 0.4 |
| Split | wt.% | 78 | 40 |
| C2 content (A1) | wt.% | 6.8 | 1 |
| C2 content (A1) | mole% | 12.7 | 1.98 |

(continued)

| Second reactor | | | |
|---|---|---|---|
| | | | |
| Total mileage | Kg/gMe | 1722 | 1539 |
| Total C2 content | wt.% | 5.3 | 1.0 |
| Total C2 content | mole% | 10.07 | 1.98 |
| Note: kg/gMe = kilograms of polymer per gram of metallocene A-1; Split = amount of polymer produced in the concerned reactor. | | | |

Table 2

| | | Reference Example 1 | Example 2 |
|---|---|---|---|
| MFR (190°C/2.16 Kg) | g/10min. | 610 | 1200 |
| Intrinsic viscosity (IV) | dl/g | 0.5 | 0.4 |
| Mw/Mn | | 2.2 | 2.1 |
| TmII | °C | 98.1 | 81.9 |
| TmI | °C | 96.0 | 103 |
| Tg | °C | -26 | -13 |
| Viscosity (180°C) | mPa.s | 18,000 | 10,000 |
| Crystallinity | % | 26 | 58 |
| Density | g/cm$^3$ | 0.8900 | 0.9090 |
| Flexural Modulus | MPa | 100 | 350 |

## REFERENCE EXAMPLE 3, EXAMPLE 4 and COMPARATIVE EXAMPLES 5-6

Hot melt adhesive compositions were prepared as described above with the formulation is indicated in table 3. The HMA compositions were tested for thermal properties, which are reported in the same table 3.

Table 3

| | | Reference Example 3 | Example 4 | Comp. ex. 5 | Comp. ex. 6 |
|---|---|---|---|---|---|
| Evatane 28-420 | wt.% | | | 30.0 | |
| Affinity GA 1900 | wt.% | | | | 34.7 |
| PB-1 (Ref. Example 1) | wt.% | 34.7 | | | |
| PB-1 (Example 2) | wt.% | | 34.7 | | |
| Eastotac H130L | wt.% | 45.0 | 45.0 | 49.7 | 45.0 |
| Sasol Wax H1 | wt.% | 20.0 | 20.0 | 20.0 | 20.0 |
| AO-1010 | wt.% | 0.3 | 0.3 | 0.3 | 0.3 |
| | | | | | |
| TmI | °C | 102 | 99 | 104 | 85 |
| Tc | °C | 94 | 93 | 93 | 93 |
| Tg | °C | -22 | -22 | (*) | (*) |
| (*) = not detectable | | | | | |

Evatane™ 28-420 is an EVA copolymer with a vinyl acetate content of 28 wt.% marketed by Arkema.

Affinity™ GA 1900 is a polyolefin elastomer marketed by Dow Chemicals.

Eastotac™ H-130L is a hydrogenated hydrocarbon resin, having a ring and ball softening point of 130°C marketed by Eastman Chemical Company.

Sasol Wax H1 is a Fischer-Tropsch wax marketed by Sasol.

Irganox™ 1010 is a sterically hindered phenolic antioxidant.

The composition of examples 3 and 4 showed very good thermal stability after 48h storage in a ventilated oven at 180°C in open glass beakers: no gel formation or skinning was observed. The samples showed good color retention compared to the compositions of comparative examples 5 and 6.

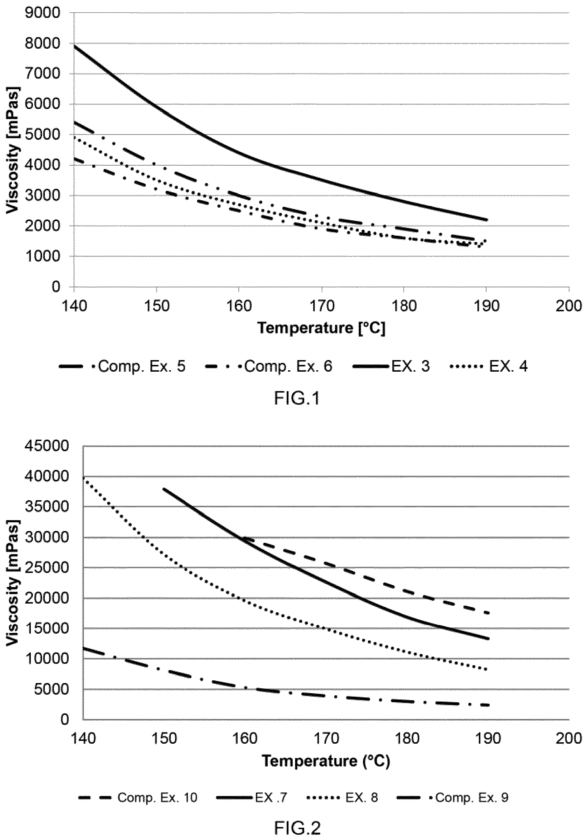

The viscosity values of the HMA compositions recorded at different temperatures are illustrated in FIG. 1. The low viscosity achieved by the composition of examples 3 and 4 ensure good wettability of porous substrates, eg. paper or cardboard.

**REFERENCE EXAMPLE 7, EXAMPLE 8 and COMPARATIVE EXAMPLES 9-10**

Hot melt adhesive compositions were prepared as described above with the formulation is indicated in table 4. The HMA compositions were tested for thermal properties, which are reported in the same table 4.

Table 4

|  |  | Reference Example 7 | Example 8 | Comp. ex. 9 | Comp. ex. 10 |
|---|---|---|---|---|---|
| Vestoplast 608 | wt.% |  |  | 28 |  |
| Vestoplast 703 | wt.% |  |  | 41.5 |  |
| Vestoplast 708 | wt.% |  |  |  | 28 |
| Vestoplast 750 | wt.% |  |  |  | 41.5 |
| PB-1 (Ref. Example 1) | wt. % | 69.5 |  |  |  |
| PB-1 (Example 2) | wt.% |  | 69.5 |  |  |
| Eastotac H130L | wt.% | 30.0 | 30.0 | 30 | 30 |
| AO-1010 | wt.% | 0.5 | 0.5 | 0.5 | 0.5 |
|  |  |  |  |  |  |
| Tml | °C | 85 | 100 | 38 | 42 |
| Tc | °C | / | / | 56 | 41 |
| Tg | °C | -27 | -26 | -21 | -17 |

Vestoplast 608, Vestoplast 703, Vestoplast 708 and Vestoplast 750 are amorphous alphaolefin polymers having Ring and Ball softening point, measured according to DIN EN 1427, of 157°C, 124°C, 106°C and 107°C respectively, marketed by Evonik.

After first melting, the compositions of examples 7 and 8 did not show any crystallization peak during cooling.

The compositions of examples 7 and 8 showed very good thermal stability after 48h storage in a ventilated oven at 180°C in open glass beakers: no gel formation or skinning was observed. Less color change was observed compared to the compositions of comparative examples 9 and 10.

The viscosity values of the HMA compositions recorded at different temperatures are illustrated in FIG. 2.

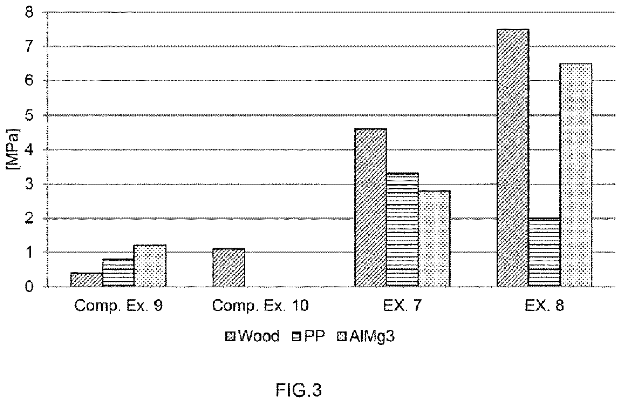

The Overlap Shear Strength values on different substrates are illustrated in FIG. 3.

The absolute and relative open time and the SAFT value of the hot melt composition of examples 7 and 8 and comparative example 9 are reported in table 5.

Table 5

|  |  | Reference Example 7 | Example 8 | Comp. ex. 9 |
|---|---|---|---|---|
| Open time | sec. | 290 | 293 | 243 |
| Relative open time | % | 119 | 121 | 100 |

(continued)

|  |  | Reference Example 7 | Example 8 | Comp. ex. 9 |
|---|---|---|---|---|
| SAFT | °C | 69 | 77 | 64 |

**Claims**

1. A hot melt adhesive composition comprising:

   (A) 28-75 wt.% of a copolymer of butene-1 with at least one comonomer selected from ethylene, propylene, C5-C10 alpha-olefins and mixtures thereof, having copolymerized comonomer content of 0.5-3.0 wt.%, Melt Flow Rate (MFR) values measured according to ISO 1133 (190°C, 2.16kg) of from 200 to 1500 g/10min. and a melting point (TmII) higher than 80°C, measured by Differential Scanning Calorimetry with a scanning speed of 10°C/minute; and
   (B) 25-72 wt.% of at least one additional component selected from among waxes, resins, plasticizers, additional polymers and mixtures thereof,

   wherein the amounts of A) and B) are referred to the total weight of A) + B).

2. The hot melt adhesive composition according to claim 1, wherein the butene-1 copolymer component (A) has a melt flow rate MFR measured according to ISO 1133 (190°C, 2.16kg) of from 400 to less than 1500 g/10 min., preferably from 500 to 1300 g/10 min.

3. The hot melt adhesive composition according to claim 1 or 2, wherein the at least one comonomer is selected from ethylene, propylene, hexene-1, octene-1 and mixture thereof, preferably the at least one comonomer is ethylene.

4. The hot melt adhesive composition according to any one of claims 1-3, wherein the butene-1 copolymer component (A) has a copolymerized comonomer content of from 0.7 to less than 2.0 wt.%, preferably of 0.7-1.5 wt.%.

5. The hot melt adhesive composition according to any one of claims 1-4, wherein the butene-1 copolymer (A) is a copolymer composition comprising:

   (A1) a butene-1 homopolymer or a copolymer of butene-1 with at least one comonomer selected from ethylene, propylene, C5-C10 alpha-olefins and mixtures thereof, having a copolymerized comonomer content (CA1) of up to 3 wt.%;
   (A2) a copolymer of butene-1 with at least one comonomer selected from ethylene, propylene, C5-C10 alpha-olefins and mixtures thereof, having a copolymerized comonomer content (CA2) of 3-10 wt.%;
   said composition having a total copolymerized comonomer content of 0.5-3.0 wt.% referred to the sum of (A1) + (A2) and preferably a content of fraction soluble in xylene at 0°C equal to or less than 60 wt.%, determined on the total weight of (A1)+(A2).

6. The hot melt adhesive composition according to any one of claims 1-5, wherein the butene-1 copolymer component (A) has at least one of the following additional features:

   (a) a molecular weight distribution (Mw/Mn) lower than 4, preferably lower than 3; more preferably lower than 2.5, the lower limit being of 1.5 in all cases; and/or
   (b) melting point (TmII) lower than 110°C, preferably lower than 100°C, more preferably lower than 90°C; and/or
   (c) glass transition temperature (Tg) in the range from - 40°C to - 10°C, preferably from - 30°C to -10°C; and/or
   (d) rotational (Brookfield) viscosity at 180°C (shear rate 100 s-1) of from 5,000 to 50,000 mPa.sec, in particular from 8,000 to 20,000 mPa.sec; and/or
   (e) X-ray crystallinity comprised in the range 25-60%.

7. The hot melt adhesive composition according to any one of claims 1-6, wherein said composition comprises:

   (A) 30-40 wt.% of a copolymer of butene-1;
   (B.1) 15-25 w.% of at least one wax,

(B.2) 42-52 wt.% of at least one resin;
wherein the amounts of (A), (B.1) and (B.2) are referred to the to the total weight of (A) + (B.1) + (B.2) and wherein the components (A), (B.1) and (B.2) are as described in any one of claims 1-6.

8. The hot melt adhesive composition according to claim 7, wherein said composition has rotational (Brookfield) viscosity at 180°C (shear rate 100 s-1) of lower than 7,000 mPa.s, or equal to or lower than 5,000 mPa.s, or equal to or lower than 3,000 mPa.s., the lower limit being 1,000 mPa.s in all cases.

9. The hot melt adhesive composition according to any one of claims 1-6, wherein the composition comprises:

   (A) 65-75 wt.% of a copolymer of butene-1; and
   (B.2) 25-35 wt.% of at least one resin,
   wherein the amounts of (A) and (B.2) are referred to the to the total weight of (A) + (B.2) and wherein the components (A) and (B.2) are as described in any one of claims 1-6.

10. The hot melt adhesive composition of claim 9, wherein the composition has rotational (Brookfield) viscosity at 180°C (shear rate 100 s-1) of 5,000 - 25,000 mPa.s, or of 7,000 - 25,000 mPa.s, or of 7,000-20,000 mPa.s, or of 10,000 - 20,000 mPa.s.

11. Use of the hot melt adhesive composition according to any one of claims 1-10 in woodworking, for packaging and in the general assembly field, particularly to assembly components of electrical equipment, ceramics, furniture, textiles, upholstery, leather, plastic, paper and cardboard.

12. The use according to claim 11 of a composition according to claims 7 or 8 in the packaging field, particularly to assembly paper and/or cardboard.

13. The use according to claim 11 of a composition according to claims 9 or 10 in woodworking and in the general assembly field, particularly to assembly components of electrical equipment, ceramics, furniture, textiles, upholstery, leather and/or plastic.

**Patentansprüche**

1. Schmelzhaftkleberzusammensetzung, umfassend:

   (A) 28 bis 75 Gew.% eines Copolymers von Buten-1 mit mindestens einem Comonomer ausgewählt aus Ethylen, Propylen, $C_5$-$C_{10}$-alpha-Olefinen und Mischungen davon mit einem Gehalt an copolymerisiertem Comonomer von 0,5 bis 3,0 Gew.%, Werten der Schmelzflussrate (MFR), gemessen gemäß ISO 1133 (190 °C, 2,16 kg), von 200 bis 1500 g/10 min. und einem Schmelzpunkt (TmII) höher als 80°C, gemessen mittels Differentialscanningkalorimetrie mit einer Scangeschwindigkeit von 10 °C/Minute; und
   (B) 25 bis 72 Gew.% von mindestens einer zusätzlichen Komponente ausgewählt aus Wachsen, Harzen, Plastifizierungsmitteln, zusätzlichen Polymeren und Mischungen davon,

   wobei die Mengen von A) und B) sich auf das Gesamtgewicht von A) + B) beziehen.

2. Schmelzhaftkleberzusammensetzung nach Anspruch 1, wobei die Buten-1-Copolymer-komponente eine Schmelzflussrate MFR, gemessen gemäß ISO 1133 (190 °C, 2,16 kg), von 400 bis weniger als 1500 g/10 min., vorzugsweise 500 bis 1300 g/10 min hat.

3. Schmelzhaftkleberzusammensetzung nach Anspruch 1 oder 2, wobei das mindestens eine Comonomer ausgewählt ist aus Ethylen, Propylen, Hexen-1, Octen-1 und Mischung davon, wobei vorzugsweise das mindestens eine Comonomer Ethylen ist.

4. Schmelzhaftkleberzusammensetzung nach einem der Ansprüche 1 bis 3, wobei die Buten-1-Copolymerkomponente (A) einen Gehalt an copolymerisiertem Comonomer von 0,7 bis weniger als 2,0 Gew.%, vorzugsweise 0,7 bis 1,5 Gew.% hat.

5. Schmelzhaftkleberzusammensetzung nach einem der Ansprüche 1 bis 4, wobei das Buten-1-Copolymer (A) eine Copolymerzusammensetzung ist, die umfasst:

(A1) ein Buten-1-Homopolymer oder ein Copolymer von Buten-1 mit mindestens einem Comonomer ausgewählt aus Ethylen, Propylen, $C_5$-$C_{10}$-alpha-Olefinen und Mischungen davon mit einem Gehalt an copolymerisiertem Conomer (CA1) von bis zu 3 Gew.%;
(A2) ein Copolymer von Buten-1 mit mindestens einem Comonomer ausgewählt aus Ethylen, Propylen, $C_5$-$C_{10}$-alpha-Olefinen und Mischungen davon mit einem Gehalt an copolymerisiertem Conomer (CA2) von 3 bis 10 Gew.%;
wobei die Zusammensetzung einen Gesamtgehalt an copolymerisiertem Comonomer von 0,5 bis 3,0 Gew.% hat, bezogen auf die Summe aus (A1) + (A2), und vorzugsweise einen Gehalt einer in Xylol bei 0 °C löslichen Fraktion gleich oder kleiner als 60 Gew.% hat, bestimmt basierend auf dem Gesamtgewicht von (A1)+(A2).

6. Schmelzhaftkleberzusammensetzung nach einem der Ansprüche 1 bis 5, wobei die Buten-1-Copolymerkomponente (A) mindestens eines der folgenden zusätzlichen Merkmale aufweist:

(a) eine Molekulargewichtsverteilung (Mw/Mn) kleiner als 4, vorzugsweise kleiner als 3; bevorzugter kleiner als 2,5, wobei die Untergrenze in allen Fällen 1,5 ist; und/oder
(b) einen Schmelzpunkt (TmII) kleiner als 110 °C, vorzugsweise kleiner als 100 °C, bevorzugter kleiner als 90 °C; und/oder
(c) eine Glasübergangstemperatur (Tg) im Bereich von -40 °C bis -10 °C, vorzugsweise von -30 °C bis -10 °C; und/oder
(d) eine Rotationsviskosität (Brookfield) bei 180 °C (Scherrate 100 s$^{-1}$) von 5000 bis 50.000 mPas, insbesondere von 8000 bis 20.000 mPas; und/oder
(e) eine Röntgenkristallinität im Bereich von 25 bis 60 %.

7. Schmelzhaftkleberzusammensetzung nach einem der Ansprüche 1 bis 6, wobei die Zusammensetzung umfasst:

(A) 30 bis 40 Gew.% eines Copolymers von Buten-1;
(B.1) 15 bis 25 Gew.% von mindestens einem Wachs;
(B.2) 42 bis 52 Gew.% von mindestens einem Harz;
wobei die Mengen von (A), (B.1) und (B.2) sich auf das Gesamtgewicht von (A) + (B.1) + (B.2) beziehen, und wobei die Komponenten (A), (B.1) und (B.2) wie in einem der Ansprüche 1 bis 6 beschrieben sind.

8. Schmelzhaftkleberzusammensetzung nach Anspruch 7, wobei die Zusammensetzung eine Rotationsviskosität (Brookfield) bei 180 °C (Scherrate 100 s$^{-1}$) von weniger als 7000 mPas, oder gleich oder niedriger als 5000 mPas, oder gleich oder niedriger als 3000 mPas hat, wobei in allen Fällen die untere Grenze 1000 mPas ist.

9. Schmelzhaftkleberzusammensetzung nach einem der Ansprüche 1 bis 6, wobei die Zusammensetzung umfasst:

(A) 65 bis 75 Gew.% eines Copolymers von Buten-1; und
(B.2) 25 bis 35 Gew.% von mindestens einem Harz,
wobei die Mengen von (A) und (B.2) sich auf das Gesamtgewicht von (A) + (B.2) beziehen, und wobei die Komponenten (A) und (B.2) wie in einem der Ansprüche 1 bis 6 beschrieben sind.

10. Schmelzhaftkleberzusammensetzung nach Anspruch 9, wobei die Zusammensetzung eine Rotationsviskosität (Brookfield) bei 180 °C (Scherrate 100 s$^{-1}$) von 5000 bis 25.000 mPas, oder von 7.000 bis 25.000 mPas, oder von 7000 bis 20.000 mPas oder von 10.000 bis 20.000 mPas hat.

11. Verwendung einer Schmelzhaftkleberzusammensetzung nach einem der Ansprüche 1 bis 10 in der Holzbearbeitung, zum Verpacken und auf dem Sektor der allgemeinen Montage, insbesondere für die Montage von Komponenten von Elektrogeräten, Keramiken, Möbeln, Textilien, Polstermaterialien, Leder, Kunststoffmaterialien, Papier und Pappe.

12. Verwendung nach Anspruch 11 von einer Zusammensetzung nach den Ansprüchen 7 oder 8 in dem Verpackungssektor, insbesondere zur Montage von Papier und/oder Pappe.

13. Verwendung nach Anspruch 11 von einer Zusammensetzung nach den Ansprüchen 9 oder 10 in der Holzbearbeitung und dem Sektor der allgemeinen Montage, insbesondere für die Montage von Komponenten von Elektrogeräten, Keramiken, Möbeln, Textilien, Polstermaterialien, Leder und/oder Kunststoffen.

**Revendications**

1. Composition adhésive thermofusible comprenant :

   (A) 28-75 % en poids d'un copolymère de butène-1 avec au moins un comonomère choisi parmi l'éthylène, le propylène, les alpha-oléfines en C5-C10 et leurs mélanges, présentant une teneur en comonomère(s) copolymérisé(s) de 0,5 à 3,0 % en poids, des valeurs d'indice de fluidité à chaud (MFR) mesurées selon la norme ISO 1133 (190 °C, 2,16 kg) de 200 à 1500 g/10 min et un point de fusion (TmII) supérieur à 80 °C, mesuré par calorimétrie différentielle à balayage à une vitesse de balayage de 10 °C/minute ; et
   (B) 25 à 72 % en poids d'au moins un constituant supplémentaire choisi parmi les cires, les résines, les plastifiants, des polymères supplémentaires et leurs mélanges,

   les quantités de A) et B) se rapportant au poids total de A) + B).

2. Composition adhésive thermofusible selon la revendication 1, le constituant copolymère de butène-1 (A) présentant un indice de fluidité à chaud MFR mesuré selon la norme ISO 1133 (190 °C, 2,16 kg) de 400 à moins de 1500 g/10 min, préférablement de 500 à 1300 g/10 min.

3. Composition adhésive thermofusible selon la revendication 1 ou 2, ledit au moins un comonomère étant choisi parmi l'éthylène, le propylène, l'hexène-1, l'octène-1 et leur mélange, préférablement ledit au moins un comonomère étant l'éthylène.

4. Composition adhésive thermofusible selon l'une quelconque des revendications 1 à 3, le constituant copolymère de butène-1 (A) présentant une teneur en comonomère(s) copolymérisé(s) de 0,7 à moins de 2,0 % en poids, préférablement de 0,7 à 1,5 % en poids.

5. Composition adhésive thermofusible selon l'une quelconque des revendications 1 à 4, le copolymère de butène-1 (A) étant une composition copolymère comprenant :

   (A1) un homopolymère de butène-1 ou un copolymère de butène-1 avec au moins un comonomère choisi parmi l'éthylène, le propylène, les alpha-oléfines en C5-C10 et leurs mélanges, présentant une teneur en comonomère(s) copolymérisé(s) (CA1) de jusqu'à 3 % en poids ;
   (A2) un copolymère de butène-1 avec au moins un comonomère choisi parmi l'éthylène, le propylène, les alpha-oléfines en C5-C10 et leurs mélanges, présentant une teneur en comonomère(s) copolymérisé(s) (CA2) de 3 à 10 % en poids ;
   ladite composition présentant une teneur totale en comonomère(s) copolymérisé(s) de 0,5 à 3,0 % en poids par rapport à la somme de (A1) + (A2) et préférablement une teneur en fraction soluble dans le xylène à 0 °C égale ou inférieure à 60 % en poids, déterminée sur le poids total de (A1)+(A2).

6. Composition adhésive thermofusible selon l'une quelconque des revendications 1 à 5, le constituant copolymère de butène-1 (A) présentant au moins l'une des caractéristiques supplémentaires suivantes :

   (a) une distribution des poids moléculaires (Mw/Mn) inférieure à 4, préférablement inférieure à 3 ; plus préférablement inférieure à 2,5, la limite inférieure étant de 1,5 dans tous les cas ; et/ou
   (b) un point de fusion (TmII) inférieur à 110 °C, préférablement inférieur à 100 °C, plus préférablement inférieur à 90 °C ; et/ou
   (c) une température de transition vitreuse (Tg) dans la plage de -40 °C à -10 °C, préférablement de -30 °C à -10 °C ; et/ou
   (d) une viscosité rotationnelle (Brookfield) à 180 °C (taux de cisaillement 100 s$^{-1}$) de 5000 à 50.000 mPa.s, en particulier de 8000 à 20.000 mPa.s ; et/ou
   (e) une cristallinité aux rayons X située dans la plage de 25 à 60 %.

7. Composition adhésive thermofusible selon l'une quelconque des revendications 1 à 6, ladite composition comprenant :

(A) 30 à 40 % en poids d'un copolymère de butène-1 ;
(B.1) 15 à 25 % en poids d'au moins une cire,
(B.2) 42 à 52 % en poids d'au moins une résine ;
les quantités de (A), (B.1) et (B.2) se rapportant au poids total de (A) + (B.1) + (B.2) et les constituants (A), (B.1) et (B.2) étant tels que décrits dans l'une quelconque des revendications 1 à 6.

8. Composition adhésive thermofusible selon la revendication 7, ladite composition présentant une viscosité rotationnelle (Brookfield) à 180 °C (taux de cisaillement 100 s$^{-1}$) inférieure à 7000 mPa.s ou égale ou inférieure à 5000 mPa.s ou égale ou inférieure à 3000 mPa.s, la limite inférieure étant de 1000 mPa.s dans tous les cas.

9. Composition adhésive thermofusible selon l'une quelconque des revendications 1 à 6, la composition comprenant :

(A) 65 à 75 % en poids d'un copolymère de butène-1 ; et
(B.2) 25 à 35 % en poids d'au moins une résine,
les quantités de (A) et (B.2) se rapportant au poids total de (A) + (B.2) et les constituants (A) et (B.2) étant tels que décrits dans l'une quelconque des revendications 1 à 6.

10. Composition adhésive thermofusible selon la revendication 9, la composition présentant une viscosité rotationnelle (Brookfield) à 180 °C (taux de cisaillement 100 s$^{-1}$) de 5000 à 25.000 mPa.s ou de 7000 à 25.000 mPa.s ou de 7000 à 20.000 mPa.s ou de 10.000 à 20.000 mPa.s.

11. Utilisation de la composition adhésive thermofusible selon l'une quelconque des revendications 1 à 10 dans le travail du bois, pour l'emballage et dans le domaine général de l'assemblage, en particulier pour assembler des composants d'équipement électrique, de céramiques, de mobilier, de textiles, de rembourrage, de cuir, de plastique, de papier et de carton.

12. Utilisation selon la revendication 11 d'une composition selon les revendications 7 ou 8 dans le domaine de l'emballage, en particulier pour l'assemblage de papier et/ou de carton.

13. Utilisation selon la revendication 11 d'une composition selon les revendications 9 ou 10 dans le travail du bois et dans le domaine général de l'assemblage, en particulier pour assembler des composants d'équipement électrique, de céramiques, de mobilier, de textiles, de rembourrage, de cuir et/ou de plastique.

FIG.1

FIG.2

FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 671431 A
- EP 314495 A
- US 2008190541 A1
- US 6218457 B1
- WO 2015074830 A
- WO 2018007451 A
- WO 2018007280 A
- WO 2004099269 A
- WO 2006045687 A
- WO 0147939 A